# EUROPÄISCHE PATENTSCHRIFT

(11) **EP 1 985 346 B1**
(45) Veröffentlichungstag und Bekanntmachung des Hinweises auf die Patenterteilung: **21.12.2011**
(21) Anmeldenummer: 08153391.1
(22) Anmeldetag: 27.03.2008
(51) Int. Cl.: B01B 1/00

(54) **Verdampfereinrichtung**
Vaporiser device
Dispositif d'évaporation

(30) Priorität: 23.04.2007 DE 102007019360
(43) Veröffentlichungstag der Anmeldung: 29.10.2008
(73) Patentinhaber: J. Eberspächer GmbH & Co. KG, 73730 Esslingen (DE)
(72) Erfinder: Kaupert, Andreas, 73730 Esslingen (DE); Egyed, Karl-Heinz, 70794 Filderstadt (DE)
(74) Vertreter: BRP Renaud & Partner

(56) Entgegenhaltungen:
- EP-A2- 1 354 852
- DE-A1- 10 020 089
- US-A1- 2006 220 267

## Beschreibung

Die vorliegende Erfindung betrifft eine Verdampfereinrichtung zum Verdampfen eines flüssigen Kraftstoffs, insbesondere für einen Reformer eines Brennstoffzellensystems. Die Erfindung betrifft außerdem einen mit einer derartigen Verdampfereinrichtung ausgestatteten Reformer sowie ein mit einer derartigen Verdampfereinrichtung ausgestattetes Brennstoffzellensystem.

Bei Reformern, die in einem Kraftfahrzeug zum Einsatz kommen, z.B. als Bestandteil eines Brennstoffzellensystems, bietet es sich an, den im Fahrzeug zum Betreiben einer Brennkraftmaschine ohnehin mitgeführten Kraftstoff zum Herstellen eines Wasserstoffgas enthaltenden Reformatgases zu verwenden. Beispielsweise eignen sich ohne Beschränkung der Allgemeinheit Benzin, Diesel, Erdgas und Biodiesel zur Verwendung in einem Reformer. Bei flüssigen Kraftstoffen lässt sich häufig eine inhomogene Gemischbildung zwischen dem verdampften Kraftstoff und dem gasförmigen Oxidator, in der Regel Luft, beobachten.

Aus der DE 100 20 089 A1 ist es bekannt, zur Kraftstoffversorgung eines Reformers, insbesondere eines Brennstoffzellensystems, eine Dosiereinrichtung vorzusehen. Die bekannte Dosiereinrichtung weist eine einen Kraftstofftank mit einem Kraftstoffeinlass des Reformers verbindende Zuführleitung zum Einbringen von flüssigem Kraftstoff in den Reformer auf. In dieser Zuführleitung ist eine Fördereinrichtung zum Antreiben des flüssigen Kraftstoffs angeordnet. Außerdem ist in der Zuführleitung stromab der Fördereinrichtung ein Dosierventil zum Einstellen eines durch die Zuführleitung vom Dosierventil zum Reformer fließenden Kraftstoffstroms angeordnet. Die bekannte Dosiereinrichtung umfasst außerdem eine Rückführleitung, die eingangsseitig zwischen der Fördereinrichtung und dem Druckregelventil an die Zuführleitung und ausgangsseitig an den Kraftstofftank angeschlossen ist. Zusätzlich ist bei der bekannten Dosiereinrichtung in der Rückführleitung ein Druckhalteventil zum Einstellen eines vorbestimmten oder vorbestimmbaren Drucks angeordnet.

Aus der DE 102 17 675 A1 ist ein Reformer zum Generieren eines Wasserstoffgas enthaltenden Reformatgases bekannt, bei dem einem Kraftstoffanschluss ein Verdampfer zugeordnet ist. Beim bekannten Reformer besteht der Verdampfer im wesentlichen aus einer porösen Verdampferstruktur, die beispielsweise durch Vliesmaterial oder sonstiges Gewebe oder mattenartiges Gewebe, Schaum, Keramik oder dgl. gebildet sein kann. Der Kraftstoff wird dabei über eine entsprechende Zuführeinrichtung unmittelbar in die Verdampferstruktur eingebracht, in der sich der flüssige Kraftstoff durch Kapillarwirkung
Aus der EP1354852 ist eine Verdampfereinrichtung zur Kraftversorgung eines Reformers bekannt, die Verdampfereinrichtung umfassend eine poröse Verdampferstruktur, eine Brennstoffzuleitung und eine Dosierpumpe. großvolumig ausbreitet. Hierdurch vergrößert sich seine Oberfläche extrem, was die Kraftstoffverdampfung begünstigt.

Die vorliegende Erfindung beschäftigt sich mit dem Problem, für eine Verdampfereinrichtung bzw. für einen damit ausgestatteten Reformer bzw. für ein damit ausgestattetes Brennstoffzellensystem eine verbesserte Ausführungsform anzugeben, die sich insbesondere durch eine homogene Gemischbildung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Verdampfereinrichtung zu schaffen, die mit einer porösen Verdampferstruktur und einer Dosiereinrichtung arbeitet, die es ermöglicht, einen erwünschten Kraftstoffstrom gezielt in die Verdampferstruktur einzubringen. Die hierbei verwendete poröse Verdampferstruktur kann dabei grundsätzlich der aus der zuvor genannten DE 102 17 675 A1 bekannten Verdampferstruktur entsprechen. Dementsprechend wird der Offenbarungsgehalt dieses Dokuments durch ausdrückliche Bezugnahme zum Offenbarungsgehalt der vorliegenden Erfindung hinzugefügt. Als Dosiereinrichtung kann grundsätzlich eine Dosiereinrichtung verwendet werden, wie sie beispielsweise aus der zuvor genannten DE 100 20 089 A1 bekannt ist, deren Offenbarungsgehalt dementsprechend durch ausdrückliche Bezugnahme zum Offenbarungsgehalt der vorliegenden Erfindung hinzugefügt wird. Zusätzlich ist bei der Erfindung die an sich bekannte Dosiereinrichtung mit wenigstens einem Blasenabscheider zum Entfernen von Blasen aus dem in der Zuführleitung geförderten flüssigen Kraftstoff ausgestattet. Dieser ist hierzu in der Zuführleitung stromauf der Fördereinrichtung angeordnet. Die Erfindung nutzt hierbei die Erkenntnis, dass Blasen im flüssigen Kraftstoff die homogene Gemischbildung behindern. Es hat sich gezeigt, dass die Entfernung von Blasen aus dem Kraftstoff zu einer gleichmäßigeren Förderleistung der Fördereinrichtung und somit zu einer gleichmäßigeren Einleitung von Kraftstoff in die Verdampferstruktur führt, was insgesamt eine kontinuierliche Verdampfung und die Ausbildung eines homogenen Gemischs begünstigt.

Die Erfindung ist von besonderem Interesse, wenn es sich beim verwendeten flüssigen Kraftstoff um einen vergleichsweise flüchtigen Kraftstoff, also um einen Kraftstoff mit vergleichsweise niedriger Verdampfungstemperatur handelt, wie z.B. Benzin.

Bei einer vorteilhaften Ausführungsform kann in der Zuführleitung bzw. in der Rückführleitung zumindest ein Schwingungsdämpfer angeordnet sein. Diese Bauweise unterstützt die Genauigkeit der Kraftstoffdosierung mit Hilfe des Dosierventils.

Weitere wichtige Merkmale und Vorteile der Erfindung ergeben sich aus den Unteransprüchen, aus den Zeichnungen und aus der zugehörigen Figurenbeschreibung anhand der Zeichnungen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein Brennstoffzellensystem mit einem Reformer und einer Verdampfereinrichtung,
- Fig. 2: eine Verdampfereinrichtung.

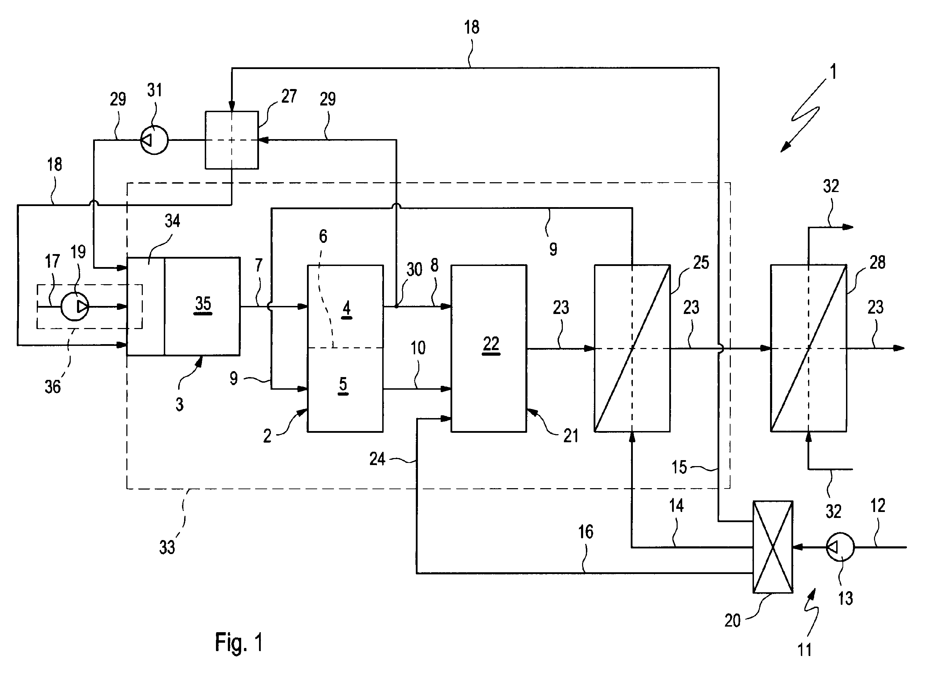

Entsprechend Fig. 1 umfasst ein Brennstoffzellensystem 1, das vorzugsweise in einem Kraftfahrzeug angeordnet sein kann, zumindest eine Brennstoffzelle 2 sowie einen Reformer 3. Die Brennstoffzelle 2 dient in üblicher Weise zum Generieren von Strom aus einem Wasserstoffgas enthaltenden Brenngas und einem Sauerstoffgas enthaltenden Oxidatorgas. Das Brenngas wird dabei einer Anodenseite 4 der Brennstoffzelle 2 zugeführt, während das Oxidatorgas, bei dem es sich zweckmäßig um Luft handelt, einer Kathodenseite 5 der Brennstoffzelle 2 zugeführt wird. In der Brennstoffzelle 2 trennt ein Elektrolyt 6 die Anodenseite 4 von der Kathodenseite 5. Üblicherweise besteht die Brennstoffzelle 2 aus einem Stapel mehrerer Brennstoffzellenelemente, in denen jeweils die Anodenseite 4 durch einen Elektrolyten 6 von der Kathodenseite 5 getrennt ist. Vorzugsweise handelt es sich bei der Brennstoffzelle um eine Hochtemperatur-Brennstoffzelle, die insbesondere als Festkörper-Brennstoffzelle bzw. als SOFC-Brennstoffzelle ausgestaltet sein kann. Ebenso ist es grundsätzlich möglich, die Brennstoffzelle 2 als Niedertemperatur-Brennstoffzelle auszugestalten, die insbesondere eine PEM-Brennstoffzelle sein kann, die mit einer Protonen-Transport-Membran bzw. mit einer Polymer-Elektrolyt-Membran als Elektrolyt 6 arbeitet. Für diesen Fall kann zusätzlich eine hier nicht gezeigte CO-Reinigungseinrichtung zwischen Reformer 3 und Brennstoffzelle 2 vorgesehen sein.

Die Brennstoffzelle 2 erhält eingangsseitig über eine an die Anodenseite 4 angeschlossene Anodengasleitung 7 ein durch das Brenngas gebildetes Anodengas. Ein Wasserstoffgas enthaltendes Anodenabgas verlässt die Brennstoffzelle 2 ausgangsseitig über eine Anodenabgasleitung 8, die ebenfalls an die Anodenseite 4 angeschlossen ist. Des Weiteren erhält die Brennstoffzelle 2 eingangsseitig über eine an die Kathodenseite 5 angeschlossene Kathodengasleitung 9 ein durch das Oxidatorgas gebildetes Kathodengas. Ein Kathodenabgas verlässt die Brennstoffzelle 2 ausgangsseitig über eine Kathodenabgasleitung 10, die hierzu an die Kathodenseite 5 angeschlossen ist.

Das Brennstoffzellensystem 1 ist zweckmäßig mit einer Oxidatorversorgungseinrichtung 11 ausgestattet, die zum Zuführen von Oxidatorgas, also insbesondere von Luft, zu wenigstens einer Komponente des Brennstoffzellensystems 1 ausgestaltet ist. Hierzu weist sie eine Versorgungsleitung 12 auf, in der eine geeignete Fördereinrichtung 13, z.B. eine Pumpe oder ein Gebläse, zum Antreiben des Oxidatorgases angeordnet ist. Die Versorgungsleitung 12 kann an die jeweilige mit Oxidatorgas zu versorgende Komponente des Brennstoffzellensystems 1 direkt oder - wie hier - über einen entsprechenden Versorgungsleitungszweig angeschlossen sein. Beim hier gezeigten Beispiel sind drei derartige Versorgungsleitungszweige vorgesehen, nämlich ein erster Versorgungsleitungszweig 14, ein zweiter Versorgungsleitungszweig 15 und ein dritter Versorgungsleitungszweig 16. Der erste Versorgungsleitungszweig 14 bildet die Kathodengasleitung 9 und führt das Oxidatorgas der Brennstoffzelle 2 zu.

Zur gezielten Aufteilung des mit der Fördereinrichtung 13 geförderten Oxidatorgases von der gemeinsamen Versorgungsleitung 12 auf die einzelnen Versorgungsleitungszweige 14, 15, 16 kann eine Ventileinrichtung 20 vorgesehen sein, die über eine entsprechende, hier nicht dargestellte Steuerung gezielt so betätigbar ist, dass die jeweils erforderliche Oxidatorgasmenge durch den jeweiligen Versorgungsleitungszweig 14, 15, 16 förderbar ist.

Der Reformer 3 dient zum Erzeugen des Brenngases aus einem flüssigen Kraftstoff und aus einem Oxidatorgas, vorzugsweise Luft. Hierzu ist der Reformer 3 eingangsseitig an eine Kraftstoffleitung 17 und an eine Oxidatorleitung 18 angeschlossen. In der Kraftstoffleitung 17 ist eine Fördereinrichtung 19 zum Antreiben des Kraftstoffs angeordnet, z.B. eine Pumpe. Beim Kraftstoff handelt es sich um einen atomaren Wasserstoff enthaltenden flüssigen Kraftstoff, vorzugsweise um einen Kohlenwasserstoff. Zweckmäßig kann dabei derjenige Kraftstoff verwendet werden, der in einem mit dem Brennstoffzellensystem 1 ausgestatteten Kraftfahrzeug ohnehin zum Betreiben einer Brennkraftmaschine des Fahrzeugs vorhanden ist, also insbesondere Benzin, Diesel, Biodiesel. Die Oxidatorleitung 18 führt dem Reformer 3 das Oxidatorgas zu und ist im gezeigten Beispiel durch den zweiten Versorgungsleitungszweig 15 gebildet.

Das Brennstoffzellensystem 1 kann außerdem einen Restgasbrenner 21 aufweisen, der zum Verbrennen von Anodenabgas mit Kathodenabgas ausgestaltet ist. Hierzu ist der Restgasbrenner 21 eingangsseitig an die Anodenabgasleitung 8 und an die Kathodenabgasleitung 10 angeschlossen. Bevorzugt ist der Restgasbrenner 21 mit einem Brennraum 22 ausgestattet, in dem eine Verbrennungsreaktion mit offener Flamme abläuft. Grundsätzlich ist jedoch auch ein Restgasbrenner 21 denkbar, der einen Oxidationskatalysator aufweist und mit katalytischer Verbrennung arbeitet. Ausgangsseitig ist an den Restgasbrenner 21 eine Abgasleitung 23 angeschlossen, über die ein durch die Verbrennungsreaktion gebildetes Brennerabgas vom Restgasbrenner 21 abgeführt wird. Optional kann an den Restgasbrenner 21 eine Kühlgasleitung 24 angeschlossen sein, und zwar insbesondere kathodenseitig. Über die Kühlgasleitung 24 ist bei Bedarf ein Kühlgas, vorzugsweise Luft, dem Restgasbrenner 21 zuführbar. Im gezeigten Beispiel ist die Kühlgasleitung 24 durch den dritten Versorgungsleitungszweig 16 gebildet.

Bei der hier gezeigten, bevorzugten Ausführungsform dient die Oxidatorversorgungseinrichtung 11 zur Versorgung der Brennstoffzelle 2 des Reformers 3 und des Restgasbrenners 21 mit Oxidatorgas. Bei einer anderen Ausführungsform kann die Oxidatorversorgungseinrichtung 11 auch so ausgestaltet sein, dass sie nur eine dieser Komponenten 2, 3, 21 oder nur zwei dieser Komponenten 2, 3, 21 mit dem Oxidatorgas versorgt. Zur Versorgung der jeweils anderen Komponente oder Komponenten 2, 3, 21 kann dann zumindest eine weitere Oxidatorversorgungseinrichtung vorgesehen sein.

Das Brennstoffzellensystem 1 kann des Weiteren zumindest einen Wärmeübertrager aufweisen. Im gezeigten Beispiel sind vier Wärmeübertrager vorgesehen, nämlich ein Hauptwärmeübertrager 25, ein Rezirkulationswärmeübertrager 27 und ein Hilfswärmeübertrager 28. Der Hauptwärmeübertrager 25 ist einerseits in die Abgasleitung 23 und andererseits in die Kathodengasleitung 9 bzw. in den ersten Versorgungsleitungszweig 14 eingebunden und dient somit zur Übertragung von Wärme vom Brennerabgas auf das Kathodengas. Der Rezirkulationswärmeübertrager 27 ist einerseits in die Oxidatorgasleitung 18 bzw. in den zweiten Versorgungsleitungszweig 15 und andererseits in eine Rezirkulationsleitung 29 eingebunden. Diese Rezirkulationsleitung 29 zweigt bei 30 von der Anodenabgasleitung 8 ab und ist an die Eingangsseite des Reformers 3 angeschlossen. Sie enthält stromab des Rezirkulationswärmeübertragers 27 eine Fördereinrichtung 31 zum Antreiben des rezirkulierten Anodenabgases, bei der es sich beispielsweise um eine Pumpe, ein Gebläse oder einen Kompressor handeln kann. Das Anodenabgas kann je nach Betriebszustand der Brennstoffzelle 2 einen relativ hohen Anteil an Wasserstoffgas enthalten und kann somit durch die Rückführung in den Reformer 3 zur Steigerung des Wirkungsgrads genutzt werden. Schließlich ist der Hilfswärmeübertrager 28 einerseits in die Abgasleitung 23 und andererseits in eine Leitung 32 eingebunden, die zu einem grundsätzlich beliebigen Wärmeverbraucher führen kann. Insbesondere kann der Hilfswärmeübertrager 28 über die Leitung 32 in einen Kühlkreis einer Brennkraftmaschine des mit dem Brennstoffzellensystem 1 ausgestatteten Kraftfahrzeugs oder in einen Heizkreis zum Aufwärmen eines Fahrzeuginnenraums des mit dem Brennstoffzellensystem 1 ausgestatteten Fahrzeugs eingebunden sein. Der Hilfswärmeübertrager 28 ist in der Abgasleitung 23 stromab des Hauptwärmeübertragers 25 angeordnet und kann dem Brennerabgas zusätzliche Wärme entziehen.

Brennstoffzelle 2, Restgasbrenner 21, Hauptwärmeübertrager 25, Rezirkulationswärmeübertrager 27 und Hilfswärmeübertrager 28 bilden in den gezeigten Beispielen jeweils separate Komponenten. Grundsätzlich ist es jedoch möglich, zumindest zwei dieser Komponenten baulich zu einer Einheit zu integrieren. Beispielsweise kann der Restgasbrenner 21 in eine Ausgangsseite der Brennstoffzelle 2 integriert werden. Zusätzlich oder alternativ kann der Hauptwärmeübertrager 25 in die Ausgangsseite des Restgasbrenners 21 integriert werden. Ebenso ist es möglich, zwei oder mehr Wärmeübertrager 25, 27, 28 zu einer baulichen Einheit zu integrieren.

Das Brennstoffzellensystem 1 weist hier außerdem eine thermisch isolierende Isolationshülle 33 auf, die durch eine unterbrochene Linie angedeutet ist. Sie besteht aus einem thermisch isolierenden Material. Im gezeigten Beispiel sind von der Isolationshülle 33 die Brennstoffzelle 2, der Reformer 3, der Restgasbrenner 21 und der Hauptwärmeübertrager 25 umhüllt, während der Rezirkulationswärmeübertrager 27 mit der zugehörigen Fördereinrichtung 31 und der Hilfswärmeübertrager 28 sowie Teile der Oxidatorversorgungseinrichtung 11 außerhalb der Isolationshülle 33 angeordnet sind. Denkbar ist auch eine Ausführungsform, bei der die Isolationshülle 33 aus mehreren Teilhüllen besteht.

Im Bereich der mit den entsprechenden Anschlüssen versehenen Eingangsseite des Reformers 3 ist die Kraftstoffleitung 17 direkt an den Reformer 3 anschließbar; die Isolationshülle 33 kann dort eine entsprechende Aussparung aufweisen. Auf diese Weise wird vermieden, die Kraftstoffleitung 17 innerhalb der Isolationshülle 33 zu verlegen.

Der Reformer 3 enthält einen Gemischbildungsabschnitt 34 und einen Reaktorabschnitt 35. Im Gemischbildungsabschnitt 34 wird ein möglichst homogenes Gemisch aus verdampftem Kraftstoff und Oxidatorgas sowie ggf. rückgeführtem Anodenabgas gebildet. Dieses Gemisch wird dem Reaktorabschnitt 35 zugeführt. Im Reaktorabschnitt 35 erfolgt die Generierung des Reformatgases oder Brenngases oder Anodengases. Der Reaktorabschnitt 35 arbeitet beispielsweise mit partieller Oxidation und kann hierzu einen entsprechenden Katalysator enthalten. Zur Verdampfung des dem Reformer 3 in flüssigem Zustand zugeführten Kraftstoffs, bei dem es sich vorzugsweise um Benzin handelt, weist das Brennstoffzellensystem 1 eine Verdampfereinrichtung 36 auf, die in Fig. 1 durch einen mit unterbrochener Linie gezeichneten Rahmen angedeutet ist. Die Verdampfereinrichtung 36 kann dabei einen Bestandteil des Reformers 3 bilden und insbesondere die Kraftstoffleitung 17 sowie die zugehörige Fördereinrichtung 19 beinhalten.

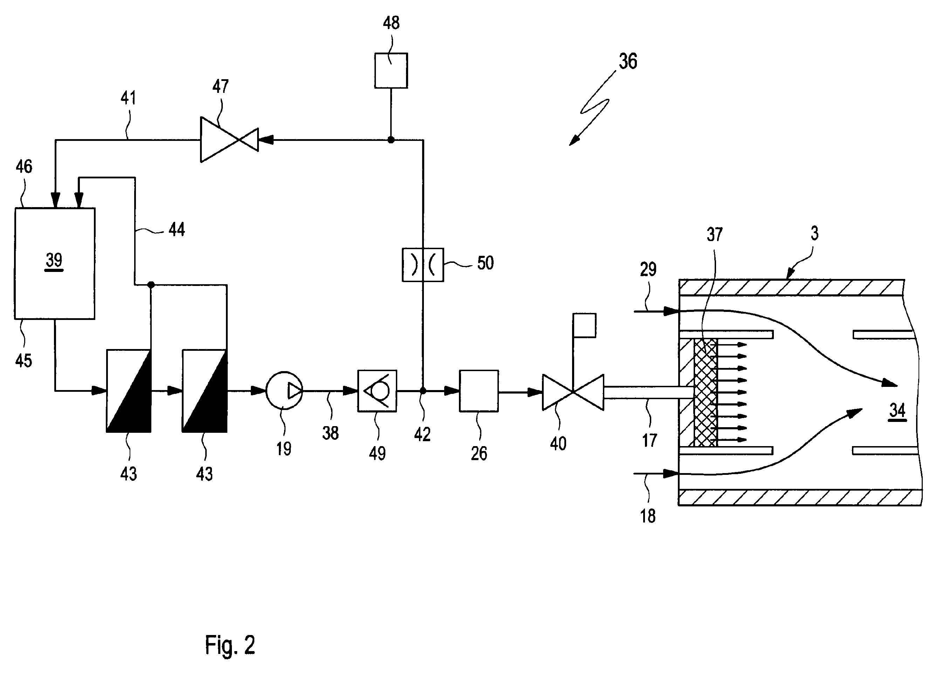

Entsprechend Fig. 2 umfasst eine derartige Verdampfereinrichtung 36 eine poröse Verdampferstruktur 37, die so ausgestaltet ist, dass ein darin eingebrachter flüssiger Kraftstoff leichter verdampft. Insbesondere bewirkt die Verdampferstruktur 37, dass sich darin eingeleiteter Kraftstoff, insbesondere aufgrund von Kapillarkräften, im Volumen der Verdampferstruktur 37 ausbreitet und dadurch seine für die Verdampfung bereitstehende Oberfläche extrem vergrößert. Die Verdampfereinrichtung 36 umfasst außerdem eine Zuführleitung 38, die der Kraftstoffleitung 17 entspricht. Dementsprechend umfasst die Verdampfereinrichtung 36 die in der Zuführleitung 38 angeordnete Fördereinrichtung 19. Die Zuführleitung 38 verbindet einen Kraftstofftank 39 mit der Verdampferstruktur 37. Die Zuführleitung 38 ist so ausgestaltet, dass sie den flüssigen Kraftstoff unmittelbar in die Verdampferstruktur 37 einbringt. Vorzugsweise endet die Zuführleitung 38 hierzu unmittelbar an oder in der Verdampferstruktur 37.

Die Verdampfereinrichtung 36 umfasst außerdem ein Dosierventil 40, das in der Zuführleitung 38 stromab der Fördereinrichtung 19 angeordnet ist. Das Dosierventil 40 ist so ausgestaltet, dass damit ein durch die Zuführleitung 38 vom Dosierventil 40 zur Verdampferstruktur 37 fließender Kraftstoffstrom einstellbar ist. Ferner umfasst die Verdampfereinrichtung 36 eine Rückführleitung 41. Diese ist eingangsseitig zwischen der Fördereinrichtung 19 und dem Dosierventil 40 an die Zuführleitung 38 und ausgangsseitig an den Kraftstofftank 39 angeschlossen. Eine Anschlussstelle oder Verbindungsstelle zwischen der Zuführleitung 38 und der Rückführleitung 41 ist hier mit 42 bezeichnet. Optional kann zwischen dem Dosierventil 40 und der Verbindungsstelle 42 ein Sperrventil 26 in der Zuführleitung 38 angeordnet sein, mit dem die Zuführleitung 38 gesperrt und das Dosierventil 40 entlastet werden kann.

Die Verdampfereinrichtung 36 weist außerdem zumindest einen Blasenabscheider 43 auf. Im gezeigten Beispiel sind zwei derartige Blasenabscheider 43 vorgesehen. Bei anderen Ausführungsformen kann ein einzelner Blasenabscheider 43 ausreichen; ebenso können auch mehr als zwei Blasenabscheider 43 vorgesehen sein. Die Blasenabscheider 43 sind vorzugsweise in Reihe angeordnet, so dass sie vom gesamten Kraftstoffstrom nacheinander durchströmt werden. Der jeweilige Blasenabscheider 43 ist zweckmäßig stromauf der Fördereinrichtung 19 in der Zuführleitung 38 angeordnet und ist jeweils so ausgestaltet, dass er Blasen aus dem in der Zuführleitung 38 geförderten flüssigen Kraftstoff entfernen kann. Die abgeschiedenen Blasen können dann über einen entsprechenden Rücklauf 44 dem Kraftstofftank 39 rückgeführt werden. Sofern mehrere Blasenabscheider 43 vorgesehen sind, kann es zweckmäßig sein, für diese einen gemeinsamen Rücklauf 44 vorzusehen.

Vorzugsweise ist die Zuführleitung 38 an einer im Einbauzustand unten angeordneten Unterseite 45 angeschlossen, während die Rücklaufleitung 41 an einer im Einbauzustand oben liegenden Oberseite 46 des Kraftstofftanks 39 an diesen angeschlossen ist. Auch der Rücklauf 44 ist zweckmäßig oben an den Kraftstofftank 39 angeschlossen, vorzugsweise im Kraftstoffdampfbereich.

In der Rückführleitung 41 ist vorzugsweise ein Druckhalteventil 47 angeordnet, das so ausgestaltet ist, dass damit ein vorbestimmter oder ein vorbestimmbarer Druck im Kraftstoff stromauf des Druckhalteventils 47 einstellbar ist. Stromauf des Druckhalteventils 47 kann ein Drucksensor 48 an die Rückführleitung 41 angeschlossen sein, um den vom Druckhalteventil 47 eingestellten Druck im Kraftstoff stromauf des Druckhalteventils 47 zu messen. Insbesondere kann in Verbindung mit einem einstellbaren Druckhalteventil 47 ein geschlossener Regelkreis zum Einstellen eines gewünschten Drucks realisiert werden.

Bei der hier gezeigten bevorzugten Ausführungsform ist optional zwischen der Fördereinrichtung 19 und der Anschlussstelle 42 der Rückführleitung 41 ein Rückschlagsperrventil 49 in der Zuführleitung 38 angeordnet. Das Rückschlagsperrventil 49 sperrt in Richtung zur Fördereinrichtung 19. Bei einer bevorzugten Ausführungsform weist die Fördereinrichtung 19 eine Zahnradpumpe auf oder ist durch eine Zahnradpumpe gebildet.

Die Verdampfereinrichtung 36 kann außerdem mit wenigstens einem Schwingungsdämpfer 50 ausgestattet sein, der so ausgestaltet ist, dass er Druckschwingungen im Kraftstoff bedämpfen kann. Exemplarisch ist ein solcher Schwingungsdämpfer 50 hier in der Rückführleitung 41 stromauf des Druckhalteventils 47 angeordnet. Grundsätzlich kann ein derartiger Schwingungsdämpfer 50 zusätzlich oder alternativ in der Zuführleitung 38 angeordnet sein, und zwar stromab der Fördereinrichtung 19 und stromauf des Dosierventils 40.

Die Verdampferstruktur 37 kann ein Vliesmaterial aufweisen oder dadurch gebildet sein. Ebenso kann die Verdampferstruktur 37 einen Metallschaum oder einen Keramikschaum oder ein Gewebe oder eine Matte aufweisen oder dadurch gebildet sein.

Die Verdampfereinrichtung 36 arbeitet wie folgt:
Bei eingeschalteter Verdampfereinrichtung 36 ist die Fördereinrichtung 19 in Betrieb, so dass diese Kraftstoff aus dem Kraftstofftank 39 ansaugt und in der Zuführleitung 38 fördert. Bei einer besonders einfachen Ausführungsform besitzt die Fördereinrichtung 19 nur eine einzige Betriebsstufe, in der sie zumindest so viel Kraftstoff fördert, wie der Reformer 3 bei maximaler Leistung benötigt. In Abhängigkeit eines aktuellen Kraftstoffbedarfs des Reformers 3 wird das Dosierventil 40 betätigt, um einen dem aktuellen Kraftstoffbedarf entsprechenden Kraftstoffstrom einzustellen. Der vom Dosierventil 40 eingestellte Kraftstoffstrom gelangt über die Zuführleitung 38 in flüssigem Zustand in die Verdampferstruktur 37 und kann dort im Gemischbildungsabschnitt 34 des Reformers 3 verdampfen und sich mit dem Oxidatorgas sowie ggf. mit dem rückgeführten Anodenabgas vermischen. Sofern der vom Dosierventil 40 eingestellte, dem Reformer 3 bzw. der Verdampferstruktur 37 zugeführte Kraftstoffstrom kleiner ist als die Fördermenge der Fördereinrichtung 19, wird die Differenz über die Rückführleitung 41 in den Tank 39 zurückgeführt. Das Druckhalteventil 47 sorgt dafür, dass die Fördereinrichtung 19 stromauf des Dosierventils 40 im Kraftstoff einen für eine ordnungsgemäße Dosierung oder Zumessung der jeweils gewünschten Kraftstoffmenge vorbestimmter Druck erzeugt. Die Blasenabscheider 43 reduzieren den Gasgehalt im Kraftstoff und bewirken bestenfalls, dass die Fördereinrichtung 19 blasenfreien Kraftstoff fördern kann. Durch das Ausscheiden der Blasen aus dem Kraftstoff kann die Fördereinrichtung 19, insbesondere wenn es sich dabei um eine Zahnradpumpe handelt, zuverlässiger arbeiten, um den gewünschten Druck im Kraftstoff und die gewünschte Fördermenge bereitzustellen. Dies führt zu einer verbesserten Verdampfung und Gemischbildung.

## Patentansprüche

1. Verdampfereinrichtung zum Verdampfen eines flüssigen Kraftstoffs, insbesondere für einen Reformer (3) eines Brennstoffzellensystems (1),
- mit einer porösen Verdampferstruktur (37) zum Verdampfen von in die Verdampferstruktur (37) eingebrachtem flüssigen Kraftstoff,
- mit einer einen Kraftstofftank (39) mit der Verdampferstruktur (37) verbindenden Zuführleitung (38) zum Einbringen von flüssigem Kraftstoff in die Verdampferstruktur (37),
- mit einer in der Zuführleitung (38) angeordneten Fördereinrichtung (19) zum Antreiben des flüssigen Kraftstoffs,
- mit einem in der Zuführleitung (38) stromab der Fördereinrichtung (19) angeordneten Dosierventil (40) zum Einstellen eines durch die Zuführleitung (38) vom Dosierventil (40) zur Verdampferstruktur (37) fließenden Kraftstoffstroms,
- mit einer Rückführleitung (41), die eingangsseitig zwischen der Fördereinrichtung (19) und dem Dosierventil (40) an die Zuführleitung (38) und ausgangsseitig an den Kraftstofftank (39) angeschlossen ist,
- mit wenigstens einem in der Zuführleitung (38) stromauf der Fördereinrichtung (19) angeordneten Blasenabscheider (43) zum Entfernen von Blasen aus dem in der Zuführleitung (38) geförderten flüssigen Kraftstoff.

2. Verdampfereinrichtung nach Anspruch 1,
**dadurch gekennzeichnet,**
**dass** in der Rückführleitung (41) ein Druckhalteventil (47) zum Einstellen eines vorbestimmten oder vorbestimmbaren Drucks angeordnet ist.

3. Verdampfereinrichtung nach Anspruch 1 oder 2,
**dadurch gekennzeichnet,**
- **dass** zumindest zwei Blasenabscheider (43) in der Zuführleitung (38) stromauf der Fördereinrichtung (19) in Reihe angeordnet sind, und/oder
- **dass** der jeweilige Blasenabscheider (43) über einen Rücklauf (44) mit dem Kraftstofftank (39) verbunden ist, und/oder
- **dass** für zwei oder mehr Blasenabscheider (43) ein gemeinsamer Rücklauf (44) vorgesehen ist.

4. Verdampfereinrichtung nach einem der Ansprüche 1 bis 3,
**dadurch gekennzeichnet,**
**dass** in der Zuführleitung (38) zwischen der Fördereinrichtung (19) und einer Anschlussstelle (42) der Rückführleitung (41) ein zur Fördereinrichtung (19) hin sperrendes Rückschlagsperrventil (49) angeordnet ist.

5. Verdampfereinrichtung nach einem der Ansprüche 1 bis 4,
**dadurch gekennzeichnet,**
**dass** die Fördereinrichtung (19) eine Zahnradpumpe aufweist oder **dadurch** gebildet ist.

6. Verdampfereinrichtung nach einem der Ansprüche 1 bis 5,
**dadurch gekennzeichnet,**
**dass** die Verdampferstruktur (37) eine poröse Struktur zur Kraftstoffverteilung und Oberflächenvergrößerung ist und insbesondere ein Vliesmaterial oder einen Metallschaum oder einen Keramikschaum oder ein Gewebe oder eine Matte aufweist oder **dadurch** gebildet ist.

7. Verdampfereinrichtung nach einem der Ansprüche 1 bis 6,
**dadurch gekennzeichnet,**
**dass** die Zuführleitung (38) unmittelbar an oder in der Verdampferstruktur (37) endet.

8. Verdampfereinrichtung nach einem der Ansprüche 1 bis 7,
**dadurch gekennzeichnet,**
**dass** in der Zuführleitung (38) und/oder in der Rückführleitung (41) zumindest ein Schwingungsdämpfer (50) angeordnet ist, und zwar bevorzugt stromab der Fördereinrichtung (19) und/oder stromauf des Druckhalteventils (47) und/oder stromauf des Dosierventils (47).

9. Reformer zum Generieren eines Wasserstoffgas enthaltenden Reformatgases aus einem flüssigen Kraftstoff und einem Oxidator, insbesondere für ein Brennstoffzellensystem (1), mit einer Verdampfereinrichtung (36) nach einem der Ansprüche 1 bis 8.

10. Brennstoffzellensystem, insbesondere in einem Kraftfahrzeug,
- mit wenigstens einer Brennstoffzelle (2) zum Generieren von elektrischem Strom aus einem Wasserstoffgas enthaltenden Anodengas und einem Sauerstoffgas enthaltenden Kathodengas,
- mit einem Reformer (3) zum Generieren des Anodengases aus einem flüssigen Kraftstoff und einem Oxidator,
- mit einer dem Reformer (3) zugeordneten Verdampfereinrichtung (36) nach einem der Ansprüche 1 bis 8.

## Claims

1. An evaporator device for evaporating a liquid fuel, particularly for a reformer (3) of a fuel cell system (1),
- with a porous evaporator structure (37) for evaporating of liquid fuel introduced into the evaporator structure (37),
- with a feed line (38) connecting a fuel tank (39) with the evaporator structure (37) for introducing liquid fuel into the evaporator structure (37),
- with a delivery device (19) arranged in the feed line (38) for driving the liquid fuel,
- with a metering valve (40) arranged in the feed line (38) downstream of the delivery device (19) for adjusting a fuel flow flowing through the feed line (38) from the metering valve (40) to the evaporator structure (37),
- with a return line (41) which is connected to the feed line (38) on the inlet side between the delivery device (19) and the metering valve (40) and on the outlet side to the fuel tank (39),
- with at least one bubble separator (43) arranged in the feed line (38) upstream of the delivery device (19) for removing bubbles from the liquid fuel delivered in the feed line (38).

2. The evaporator device according to Claim 1, **characterized in that** in the feed line (41) a pressure-maintaining valve (47) for setting a predetermined or predeterminable pressure is arranged.

3. The evaporator device according to Claim 1 or 2, **characterized**
- **in that** at least two bubble separators (43) are arranged in series in the feed line (38) upstream of the delivery device (19), and/or
- **in that** the respective bubble separator (43) is connected with the fuel tank (39) via a return (44), and/or
- **in that** a common return (44) is provided for two or more bubble separators (43).

4. The evaporator device according to any one of the Claims 1 to 3, **characterized in that** in the feed line (38) between the delivery device (19) and a connecting point (42) of the return line (41) a non-return valve (49) shutting off towards the delivery device (19) is arranged.

5. The evaporator device according to any one of the Claims 1 to 4, **characterized in that** the delivery device (19) comprises a gear pump or is formed by such.

6. The evaporator device according to any one of the Claims 1 to 5, **characterized in that** the evaporator structure (37) is a porous structure for fuel distribution and surface enlargement and more preferably comprises or is formed by a fleece material or a metal foam or a ceramic foam or a fabric or a mat.

7. The evaporator device according to any one of the Claims 1 to 6, **characterized in that** the feed line (38) directly ends on or in the evaporator structure (37).

8. The evaporator device according to any one of the Claims 1 to 7, **characterized in that** in the feed line (38) and/or in the return line (41) at least one vibration damper (50) is arranged, preferably downstream of the delivery device (19) and/or upstream of the pressure-maintaining valve (47) and/or upstream of the metering valve (47).

9. A reformer for generating a hydrogen gas-containing reformate gas from a liquid fuel and an oxidant, more preferably for a fuel cell system (1), with an evaporator device (36) according to any one of the Claims 1 to 8.

10. A fuel cell system, particularly in a motor vehicle,
- with at least one fuel cell (2) for generating electric current from a hydrogen gas-containing anode gas and an oxygen gas-containing cathode gas,
- with a reformer (3) for generating the anode gas from a liquid fuel and an oxidant,
- with an evaporator device (36) according to any one of the Claims 1 to 8 assigned to the reformer (3).

## Revendications

1. Dispositif évaporateur pour l'évaporation d'un carburant liquide, en particulier pour un reformeur (3) d'un système de cellules de combustible (1), comprenant
- un dispositif évaporateur poreux (37) pour l'évaporation de carburant liquide introduit dans la structure d'évaporateur (37),
- une conduite d'arrivée (38) reliant un réservoir de carburant (39) à la structure d'évaporateur (37) pour l'introduction de carburant liquide dans la structure d'évaporateur (37),
- un dispositif de transport (19) disposé dans la conduite d'arrivée (38) pour l'entraînement du carburant liquide,
- une vanne de dosage (40) disposée dans la conduite d'arrivée (38) en aval du dispositif de transport (19) pour le réglage d'un flux de carburant traversant la conduite d'arrivée (38) et allant de la vanne de dosage (40) à la structure d'évaporateur (37),
- une conduite de retour (41), qui est raccordée côté entrée entre le dispositif de transport (19) et la vanne de dosage (40) à la conduite d'arrivée (38) et côté sortie au réservoir de carburant (39),
- au moins un séparateur de bulles (43) disposé dans la conduite d'arrivée (38) en amont du dispositif de transport (19) pour l'enlèvement de bulles du carburant liquide transporté dans la conduite d'arrivée (38).

2. Dispositif évaporateur selon la revendication 1,
**caractérisé en ce**
**qu'**une vanne de maintien de pression (47) est disposée dans la conduite de retour (41) pour le réglage d'une pression prédéfinie ou pouvant être prédéfinie.

3. Dispositif évaporateur selon la revendication 1 ou 2, **caractérisé**
- **en ce qu'**au moins deux séparateurs de bulles (43) sont disposés en série dans la conduite d'arrivée (38) en amont du dispositif de transport (19), et/ou
- **en ce que** le séparateur de bulles (43) concerné est relié par un retour (44) au réservoir de carburant (39), et/ou
- **en ce qu'**un retour (44) commun est prévu pour deux ou plus de deux séparateurs de bulles (43).

4. Dispositif évaporateur selon l'une des revendications 1 à 3,
**caractérisé en ce**
**qu'**une vanne d'arrêt anti-retour (49) bloquant en direction du dispositif de transport (19) est disposée dans la conduite d'arrivée (38) entre le dispositif de transport (19) et un point de raccordement (42) de la conduite de retour (41).

5. Dispositif évaporateur selon l'une des revendications 1 à 4,
**caractérisé en ce que**
le dispositif de transport (19) présente une pompe à engrenages ou est formé ainsi.

6. Dispositif évaporateur selon l'une des revendications 1 à 5,
**caractérisé en ce que**
la structure d'évaporateur (37) est une structure poreuse pour la répartition de carburant et l'agrandissement de surface et présente en particulier un matériau non-tissé ou une mousse de métal ou une mousse de céramique ou un tissu ou une natte ou est formée ainsi.

7. Dispositif évaporateur selon l'une des revendications 1 à 6,
**caractérisé en ce que**
la conduite d'arrivée (38) se termine directement sur ou dans la structure d'évaporateur (37).

8. Dispositif évaporateur selon l'une des revendications 1 à 7,
**caractérisé en ce**
**qu'**au moins un amortisseur de vibrations (50) est disposé dans la conduite d'arrivée (38) et/ou dans la conduite de retour (41), et ce de préférence en aval du dispositif de transport (19) et/ou en amont de la vanne de maintien de pression (47) et/ou en amont de la vanne de dosage (47).

9. Reformeur destiné à générer un gaz de réformat contenant du gaz hydrogène à partir d'un carburant liquide et d'un oxydant, en particulier pour un système de cellules de combustible (1), avec un dispositif évaporateur (36) selon l'une des revendications 1 à 8.

10. Système de cellules de combustible, en particulier sur un véhicule automobile, comprenant
- au moins une cellule de combustible (2) destinée à générer du courant électrique à partir d'un gaz d'anode contenant du gaz hydrogène et d'un gaz de cathode contenant du gaz oxygène,
- un reformeur (3) destiné à générer le gaz d'anode à partir d'un carburant liquide et d'un oxydant,
- un dispositif évaporateur (36) attribué au reformeur (3) selon l'une des revendications 1 à 8.
